# EUROPEAN PATENT SPECIFICATION

(11) **EP 2 833 526 B1**
(45) Date of publication and mention of the grant of the patent: **13.10.2021**
(21) Application number: 13768192.0
(22) Date of filing: 21.03.2013
(51) Int. Cl.: H02K 19/26, H02K 21/42, H02K 21/44, H02K 21/04, H02K 21/38

(54) **ELECTRICAL POWER MOTOR-GENERATOR EXCITED BY MAGNETIC TRANSFERENCE**
DURCH MAGNETISCHE ÜBERTRAGUNG ERREGTER STROMMOTORGENERATOR
MOTOGÉNÉRATEUR DE PUISSANCE ÉLECTRIQUE, À EXCITATION PAR TRANSFERT MAGNÉTIQUE

(30) Priority: 28.03.2012 ES 201200334
(43) Date of publication of application: 04.02.2015
(73) Proprietor: ASEPRAUTO. S.L., 28221 Majadahonda (Madrid) (ES)
(72) Inventor: López Martín, José Luis, 28221 Majadahonda (Madrid) (ES); Pérez Rodríguez, Arturo, 28220 Majadahonda (Madrid) (ES)
(74) Representative: Izquierdo Blanco, Maria Alicia
(86) International application number: PCT/ES2013/070184
(87) International publication number: WO 2013/144401

(56) References cited:
- WO-A1-2007/139557
- DE-A1- 3 741 678
- DE-A1- 10 020 942
- DE-A1-102010 049 178
- US-A- 4 467 267
- US-A- 4 496 868
- US-A- 4 972 112
- US-A- 4 980 595
- US-A1- 2003 178 909
- None

## Description

The motor/generator that is claimed pertains to the field of electric machines of magnetic rotating field. It is a machine able to transform mechanical power, i.e. a moving mechanical force, into electric energy, and vice-versa. It is a machine in which the magnetic flux flow enters the rotor by transference through a passive air gap from a static source of magnetic flux.

### State of the art :

There are automotive alternators in which electromagnetic excitation or field is static, but whose magnetic flux passes through four air gaps, what make them completely different from the one that is claimed.

The utility model U 200402396 owned by one of the applicants of this invention patent, has static electromagnetic excitation, with a single central axial coil and only two air gaps per pole, as the one claimed in this invention patent.

It is also known from the US2003/178909A1 patent document a rotary electric machine that is composed of an keeper, an armature winding, a rotor core disposed opposite said keeper, a rotary magnetic-flux source for supplying first magnetic flux to the rotor core, a frame for supporting the keeper and the rotor core and a stationary magnetic flux source, fixed to the frame, for supplying second magnetic flux to the rotor core in a direction to supplement the first magnetic flux.

It is also known from the WO2007/139557 patent document a single field rotor motor comprising a rotor mounted for rotation with respect to a stator. The stator has a plurality of stator poles each having a coil for creating a magnetic pole force. The rotor has a plurality of circumferentially spaced salient rotor poles formed thereon, wherein the flux within the rotor maintains a constant polarity. Magnetic means are provided for creating pair of magnetic flux fields, wherein interaction of the pair of magnetic flux fields causes the magnetic flux fields to spray radially outward with respect to the rotor, thereby creating uniform magnetic polarity on the rotor poles. Circuit means are provided for alternately charging said stator coils to alternate the polarity of a given stator pole to alternately attract and repel said rotor poles to produce rotation of said rotor.

It is also known from the US4972112A patent document a brushless DC motor including a rotor assembly and a stator assembly. The rotor assembly includes a plurality of rotor permanent magnets of a first polarity. The stator assembly includes a plurality of stator magnetic field assemblies facing the rotor assembly. Each stator magnetic field assembly includes a box-like magnetic core having an opening facing the rotor assembly. A permanent magnetic core is disposed within the box-like magnetic core having a surface facing the rotor assembly and possessing a second polarity at this surface. A field coil is wound in proximity to the box-like magnetic core for energizing the stator magnetic field assembly. A boosting permanent magnet is provided along an outer surface of the box-like magnetic core.

The invention is disclosed in the independent claim 1. Preferred embodiments are disclosed in the dependent claims. The motor/generator proposed in the current patent application, includes a field source by means of only one static central and axial permanent magnet 12 or by several others,10, on the disk, 8, and on the axial armature, 6. The field permanent magnets, 10, can be replaced by excitation coils 11. All of that makes it substantially different from the aforementioned utility model in the structure and in the effects produced. Reasoning over the innovation.

The technical problems of the conventional machines and the reasoned solutions of the proposed invention are presented below.
a). In all motors/generators, and especially those aimed at automotive and wind generation, the generation of power, at low speeds without increasing the size of the machine is a problem. At high speeds the voltage is more than sufficient and therefore must be limited by the chosen regulation system.

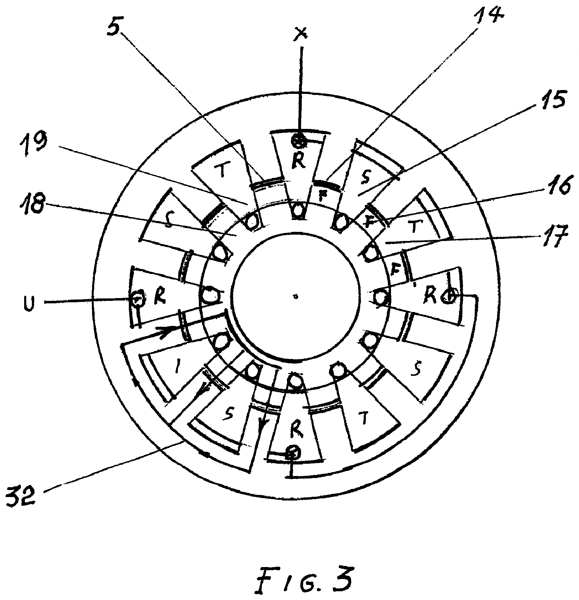

Fig. 3 shows how the flow variation per turn in the case of the innovation is 3 x F, triple than that of conventional alternators, on the coil considered, R, of a three-phase stator. This may only be carried out in the machine currently claimed because the magnetic flux flow is unidirectional.

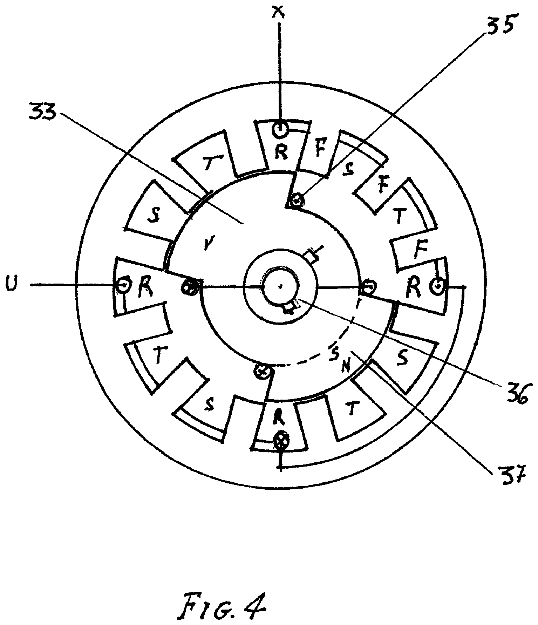

Fig. 4, of a conventional alternator, shows that the rotor pole 33 produces successive flow variation F on only one of the three stator poles encompassed by the phase "R" coil, while in the innovated alternator, Fig. 3, variation is produced at the same time on the three poles comprised by the phase "R", which should have equal flow per pole, i.e. 3 x F.

The voltage calculations, applying the relevant electro-technical formulas show this assertion.

The basic formula:
Voltage = Flow variation / Time taken for variation to take place Applied correctly, the formula proves it and the experiments confirm it.

b). Cooling at low speeds is also a problem for conventional alternators, because it limits the power that may be obtained. The cross-section of the electrical conductor of the stator winding determines the number of turns per coil and this determines the coil voltage. The greater the voltage per turn obtained, the less ohmic loss there is because fewer turns per coil are needed for the same coil voltage.

It is clear that the innovation reduces the unwanted heat produced as the voltage is considerably increased and the length of the coil wire is reduced, and thus the ohmic resistance thereof.

c). Another problem that conventional automotive alternators have is the amount of copper that the field coils require, and the heat these generate.

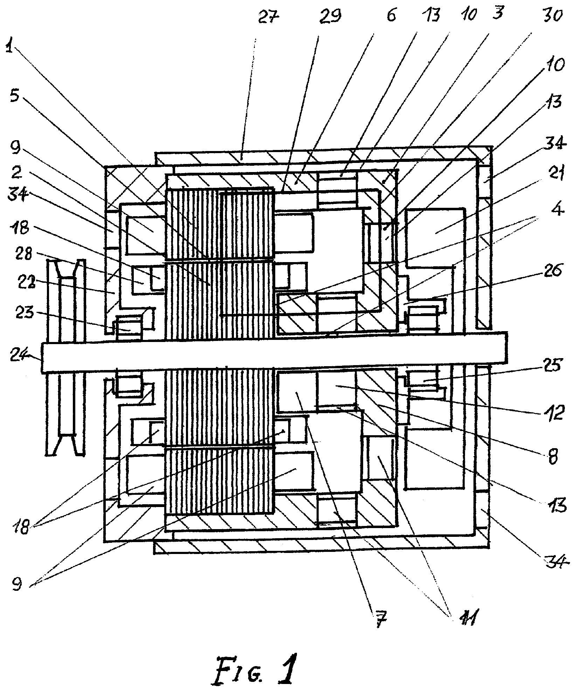

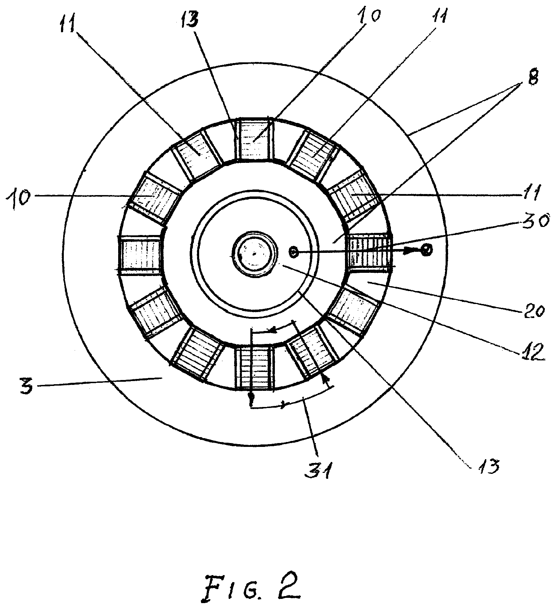

It may be seen in figure 1, which shows the schematic arrangement of an alternator according to the innovation proposed, that excitation coils 11 with their cores, i.e. electromagnets, completely replace a circular crown of the disk 8 of the outer core with ventilation windows 20 between each one of them. Moreover, they are coils with very few layers because the total turns of the field, of a conventional automotive alternator are divided by the number of electromagnets and they have a large surface in contact with the outer core and with the air, as a result of which cooling is direct and efficient. All or part of the electromagnets may be replaced by permanent magnets 10, with the North poles looking at the same side of the magnetic path, towards the periphery of the disk, fig. 2, position 30, or vice-versa, as a result of which the magnetic fluxes flow in parallel building up the total flow.

The calculations show that for the same number of ampere-turns and the same copper wire diameter, this arrangement requires a fraction of the copper wire length of a conventional one and has a much larger outer cooling surface and much less ohmic resistance than a conventional one because a central coil on a large-diameter core is replaced by several ones on smaller cores. The amount of heat generated by the excitation current is less owing to the lower ohmic resistance. Moreover, and very importantly, the amount of copper used in excitation, in the case of electromagnets, is much less than in conventional ones.

In the case of multiple coil of the proposed invention, it is one third. Therefore, they generate much less heat. The calculations show that for the same induction in the active air gap, the amount of copper is approximately a third and the heat dissipated is half or less. In addition, the cost is lower, despite there are several coils, because they are smaller and have much less copper.

The air cooling fans 28 do not necessarily need to be mounted only on the rotor. There may be another fan 21, with a larger diameter and more efficient, mounted on the outside of the magnetic keeper, but inside the housing 27 of the machine.

This enables the heat created when electrical power is generated to be quickly expelled outside. This is very important.

d). In conventional and automotive alternators, fig. 4, the excitation coil or coils 35, are on the rotor, which rotates, thus meaning that rings and brushes 36 are needed to supply them with the electric excitation current.

In the innovation there are no rings nor the brushes because the excitation coils are static. This, too, reduces cost.

e). The use of permanent magnets instead of excitation coils is highly valued, because there is no copper in the excitation, but it has the drawback that the permanent magnets in the known traditional motors/generators are placed on the rotor. Voltage regulation must be done through the stator by complicated and expensive means because the permanent magnets give a certain, fixed induction flux and rotate with the rotor.

f). Wind turbines with conventional permanent magnets have a certain start-up torque called "cogging", which prevents them from starting up at certain wind speeds, even though it is sufficient to generate energy once started-up.

The innovation that is proposed resolves these two problems, e) and f), since the field magnet or magnets 10 are not on the rotor; they are static since they are on the outer core and the magnetic field acting upon them may be adjusted via a coil of electricity-conducting wire 13 wrapped around them or via the combination of permanent magnets and electromagnets to regulate and eliminate cogging. This is achieved in the following way: see figure 2.

The magnetic polarity of the permanent magnets 10 and the electromagnets 11 work in the same direction, for example, towards the periphery of the disk 8. See fig. 2, position 30. Therefore, the flow between them is added and goes through the external core 3 to the stator and returns through the air gaps 5 and 4 to the central part of the external core, formed by a permanent magnet 12 with the coil 13 on it, to the disk 8 and from the latter to the electromagnets 11 with soft iron cores and permanent magnet 10 cores, thus completing the magnetic circuit. However, if the supply of the soft iron core electromagnets 11 is removed, the flow of the magnets circulates through the circular crown of the disk 8 and returns through the same to the opposite pole of the magnet, and therefore, the excitation and cogging disappear. See the closed circuit 31 in figure 2.

If there were only permanent magnets, 10 and 12, as the windings 13 that are wound on them are excited with an inverse current, they subtract their own flux from that of the magnets until they are cancelled out. The windings 13 are also used to restore the magnetism of the magnets in the event that they have lost it.

The use of electromagnets combined with permanent magnets, with coils wound on them, to produce the field, which is claimed in this patent, may also be applied to motors/generators in which field permanent magnets are installed in the rotor, fig. 4, for which reason it is likewise proposed as an independent claim.

In both cases, the form described above enables very simple and low-cost regulation to be carried out, as well as removing the cogging or start-up torque caused by the presence of the permanent magnets. This is very important for wind turbines, especially those with power output between 3 and 8 kW.

g). Conventional synchronous alternators cannot be converted into asynchronous motors because they have the problem that during start-up and, to a lesser extent, in normal operation, the rotation field of the stator induces dangerous currents in the windings of the inductor, because the magnetic circuit closes through the poles of the rotor where the inductor coils are located. See fig. 4.

Motors/generators with excitation by magnetic transference technology, have a secondary or passive air gap 4, as stated in the description, fig. 1, in which there is only flow transmission, without variation of the same. This means that there are no induced currents, and an active air gap 5, in which variation to flow, as well as the induced voltage and current, is produced when operating as a synchronous motor/generator.

When operating as a hypo-asynchronous motor or hyper-asynchronous motor/generator, only the existing dispersion flow and the regulation flow pass through the secondary air gap 4. It has been demonstrated experimentally this it is very small.

This essentially differentiates the machine claimed as a synchronous motor/generator and asynchronous machine, from traditional synchronous alternators with squirrel cage or coil rotor start-up, in which the two air gaps are active. This difference is very important, as explained below:
The rotation field produced by the stator, supplied by the appropriate polyphased voltage and current system, produces high induced voltage in the excitation coils in conventional synchronous alternators, because they are in the rotor and are crossed by it. See fig. 4. They are dangerous and are avoided using known and expensive devices. In the arrangement of the innovation for excitation by magnetic transference, the induced currents are closed on the core of the rotor, without significantly affecting the excitation winding that is not on the rotor but on the external core. See fig. 3, circuit 32.

h). In the case of motors/generators with conventional permanent magnets placed in the rotor, the conversion to an asynchronous motor is not possible because it damagnetises the magnets.

The innovation proposed does not have this problem because the magnets are not in the rotor but in the external core where the flow induced by the stator coils does not reach, which coils close over the keeper of the rotor as in a conventional asynchronous machine. See fig. 3, circuit 32.

### Drawings

Fig. 1.- Cross-section of the innovated alternator, with coils and permanent magnets in the disk, in the axial external armature and the central axial core.
Fig. 2.- Arrangement of magnets and electromagnets and regulation and anti-cogging coils on the disk.
Fig. 3.- Flux in the innovated alternator.
Fig. 4.- Flux in the conventional alternator.

### Description of an embodiment

Below is a description of an embodiment of the technology contained in the explanation and in the claims, without this entailing any restriction on the scope of the patent.

The machine has an aluminium front shield 22 that houses the rolling front bearing 23, for the shaft 24 of the machine, which rotates at its other end on another bearing 25 whose support 26 is held in the disk 8 of the external magnetic core 3 to guarantee the air gaps 4 and 5. An aluminium outer cover 27 closes the protective armature, which contains the main fan 21. There are another two internal fans, 28.

Figure 3 shows the cross-section of an innovated synchronous motor/generator provided with a squirrel cage 18, with the ventilation channel 19 to convert it into an asynchronous machine.

The stator 1 is joined by mechanical contact to the external core 3, which in turn is facing the rotor 2 through the secondary or passive air gap 4.

The field coils 11 and the permanent magnets 10 are inserted in the magnetic circuit 29, with their polarities thereof facing in the same direction as the field, 30, fig. 2. The central permanent magnet 12 is crossed by the total flux transmitted through the passive air gap to the rotor 2.

The poles 16 of the rotor 2 face the poles 14 of the stator, through the active air gap 5. See fig. 3.

In figure 2, electromagnets 11 and the permanent excitation magnets 10 situated on the disk 8 are represented, not those mounted on the outer axial part 6. The operation is the same.

The electromagnet 12 is situated in the central area surrounded by a coil 13, in the same way they are the other permanent magnets 10 situated in the disk 8.

The magnetic flux path in fig. 1, remarqued with a closed line 29, which, starting from the electromagnets or the permanent magnets, continues through the disk 8, goes over the axial core 6, axially and radially crosses the stator keeper 1, passes from the latter to the rotor 2 poles, through the active air gap 5; from the rotor 2 it passes through the passive air gap 4 to the central permanent magnet 12; from there, by mechanical contact, to the disk 8 and returns to the electromagnets or permanent magnets 10 and 11.

There are several ways to operate as a synchronous motor/generator:
a) With excitation by means of electromagnets. Advantages: less Cu content, less ohmic heat in the rotor and stator, conventional voltage regulation.
b) With excitation just by means of permanent magnets. Advantages: very low manufacturing cost. The claimed regulation and preservation of the magnetism: each permanent magnet has a coil 13 wrapped around it, via the supply of which, with the appropriate current, the magnet flow may be cancelled out and the value thereof adjusted, or the magnetism thereof may be restored.
c) With mixed excitation, by means of electromagnets and permanent magnets. Advantages: less copper content and less heat in excitation that a). No cogging, easy and cheap regulation from the excitation.
d) With excitation by means of only the central permanent magnet. Very low-cost solution, typical of low-power wind turbines.

All these layouts have the advantage of being able to be transformed into topologies of an asynchronous machine by adding a squirrel cage 18 on the rotor.

The appropriately designed electromagnets are equivalent to a permanent magnet, both with equal polarity facing, for example, towards the periphery of the disk 8, see fig. 2, position 30; they create the total magnetic field, and the induction B in the active air gap 5, where is produced the flow variation that generates the voltage in the stator windings.

As the excitation is removed from the electromagnets, the flow of the permanent magnets closes on itself, cogging is eliminated and the voltage is easily regulated and at a low cost. This play of magnetic fields is represented in figure 2, in the disk 8, position 31.

This requires the number of electromagnets and permanent magnets to be the same.

The cost of several excitation coils with the cores thereof is lower than that of the single central coil used by automotive alternators because it has much less copper as the diameter of the cores is much smaller. A simple calculation demonstrates this.

With regard to the poles or projections of the keepers of appropriate magnetic material, for example a thin magnetic sheet to reduce losses due to hysteresis, figures 3 and 4 show the difference between a conventional alternator and the innovated alternator.

In the innovated alternator, fig. 3, the width of the stator poles 14 and the rotor 16 are equal, measured in the air gap while the corresponding grooves, 15 of the stator and 17 of the rotor, may be equal to the width of the poles or by up to 25 percent greater to modify the shape of the voltage waveform. In figure 3 the are equal.

Figure 3 shows the flux flow lines when the innovated machine operates as an asynchronous one, circuit 32. The force lines of the rotating magnetic field created in the stator by a polyphase current, for example three-phase, is closed in the core of the rotor because the length of the magnetic circuit is smaller and has less reluctance than the circuit in figure 2, position 30 (partial) and 29 in fig.1.

The rotor of a conventional synchronous machine with permanent magnets, fig. 4, has the field magnet or magnets 37 on the poles thereof. In the innovation proposed, the permanent magnets have a coil wrapped around each one of them, via which the resulting magnetic field may be varied, to regulate the voltage, avoid cogging and restore magnetism if it has been lost.

The same effect is achieved by combining permanent magnets and electromagnets in a manner similar to that explained above for the excitation mounted on the disk 8 of figure 2, position 31.

## Claims

1. An electrical motor/generator excited by magnetic transference, comprising a stator (1) with projections and a rotor (2), in which keepers made of magnetic conductor material of a stator (1) and the rotor (2), rotating inside the stator (1), are communicated by an external core (3) of magnetic conductor material, which differs from both and is stationary relative to them, the external core (3) being joined to the keeper of the stator (1) by direct contact, and to the keeper of the rotor (2) by means of a secondary air gap (4); the said rotor (2) faces the stator (1) through the active air gap (5),
the aforementioned external core (3) has an outer axial part, which is joined directly to the keeper of the stator (1), referred to as axial armature (6), an inner part, referred to as central core (7), which communicates with the keeper of the rotor (2) through the secondary air gap (4) and a third part, which is located between the outer axial part and the inner part, and joins them together, which is referred to as disk (8); the parts of the external core (3) being made of magnetic conductor material with little or no magnetic remanence, such as soft iron and thin lamination sheets of magnetic steel,
the rotor (2) does not have any kind of excitation coil,
the keeper of the stator (1) supports a polyphase winding (9) or individual coils on each projection, **characterised in that**
the external core (3) has a complete ring-shaped cross- section of the axial armature (6) and a complete circular crown of the disk (8), formed by permanent magnets (10) and by electromagnets (11), and ventilation windows (20), between every two of them and a section of the central core (7) replaced or formed by an axial permanent magnet (12),
wherein the permanent magnets (10) are surrounded by the electromagnet (11) and the axial permanent magnet (12) are each surrounded by a coil (13), of which they are the corresponding magnetic core, both forming electromagnets with a permanent magnet core.

2. The electrical motor/generator according to claim 1, wherein the width of the stator poles (14) and the rotor poles (16) are equal, while the stator grooves (15) and rotor grooves (17) are equal or up to 25 percent greater to the width of the poles (14, 16) and are distributed at equal distances from one another.

3. The electrical motor/generator excited by magnetic transference according to claims 1 and 2, **characterised in that** the rotor (2) is provided with a squirrel cage winding.

4. The electrical motor/generator according to claim 3, wherein the squirrel cage leaves a free space or ventilation duct (19) in each groove of the rotor, which crosses the keeper from one side to the other.

## Patentansprüche

1. Ein mit magnetischer Übertragung erregter elektrischer Motor/Generator, bestehend aus einem Stator (1) mit Vorsprüngen und einem Rotor (2), wobei aus magnetischem Leitermaterial hergestellte Halter eines Stators (1) und des Rotors (2), die sich im Inneren des Stators (1) drehen, durch einen von beiden unterschiedlichen und relativ ortsfesten Außenkern (3) aus magnetischem Leitermaterial miteinander verbunden werden, wobei der Außenkern (3) durch direkten Kontakt mit dem Halter des Stators (1) und zum Halter des Rotors (2) mittels eines sekundären Luftspalts (4) verbunden ist; der Rotor (2) dem Stator (1) durch den aktiven Luftspalt (5) zugewandt ist.
Der erwähnte Außenkern (3) hat einen äußeren axialen Teil, der direkt an den Schließer des Stators (1), als Axialanker (6) bezeichnet, verbunden ist, ein Innenteil, als Zentralkern (7) bezeichnet, der über den Sekundärluftspalt mit dem Schließer des Rotors (2) verbunden ist (4) und einem dritten Teil, der sich zwischen dem äußeren Axialteil und dem inneren Teil befindet und diese miteinander verbindet, der als Scheibe (8) bezeichnet wird. Die Teile des Außenkerns (3) bestehen aus magnetischem Leitermaterial mit geringer oder keiner magnetischen Remanenz, wie Weicheisen und dünnen Blechen aus Magnetstahl.
Der Rotor weist (2) keinerlei Erregerspule auf.
Der Halter des Stators (1) trägt eine Mehrphasenwicklung (9) oder Einzelspulen an jedem Vorsprung, **dadurch gekennzeichnet, dass** der Außenkern (3) einen vollständigen ringförmigen Querschnitt des Axialankers (6) und eine vollständige kreisförmige Krone der Scheibe (8) hat, die durch Permanentmagnete (10) und durch Elektromagnete (11) gebildet ist, und Belüftungsfenster (20) zwischen ihnen jeweils und einen Abschnitt des Zentralkerns (7), der durch einen axialen Permanentmagneten (12) ersetzt oder gebildet wurde,
wobei die Permanentmagnete (10) durch den Elektromagnet (11) und die axialen Permanentmagneten (12) jeweils von einer Spule (13) umgeben sind, deren sie den entsprechenden Magnetkern bilden und beide bilden Elektromagnete mit einem Permanentmagnetkern.

2. Der elektrische Motor/Generator nach Anspruch 1, **dadurch gekennzeichnet, dass** die Breite der Statorpole (14) und der Rotorpole (16) gleich ist, während die Statornuten (15) und Rotornuten (17) gleich oder bis zu 25 Prozent größer auf die Breite der Pole (14, 16) und in gleichen Abständen voneinander verteilt sind.

3. Der von magnetischer Übertragung erregte elektrische Motor/Generator nach Anspruch 1 und 2, **dadurch gekennzeichnet, dass** der Rotor (2) mit einer Kurzschlussläuferwicklung versehen ist.

4. Der elektrische Motor/Generator nach Anspruch 3, **dadurch gekennzeichnet, dass** der Käfigläufer in jeder Nut des Rotors einen Freiraum oder Belüftungskanal (19) lässt, der den Halter von einer Seite zur anderen durchquert.

## Revendications

1. Un moteur/générateur électrique excité par transfert magnétique, comprenant un stator (1) avec des saillies et un rotor (2), dans lequel des détenteurs en matériau conducteur magnétique d'un stator (1) et du rotor (2), tournant à l'intérieur du stator (1), sont communiqués par un noyau externe (3) en matériau conducteur magnétique, qui se distingue des deux et est fixe par rapport à eux, le noyau externe (3) étant relié au détenteur du stator (1) par contact direct, et au détenteur du rotor (2) au moyen d'un entrefer secondaire (4); ledit rotor (2) fait face au stator (1) à travers l'entrefer actif (5),
le noyau externe (3) précité présente une partie axiale externe, qui est uni directement au détenteur du stator (1), dite armature axiale (6), une partie intérieure, dite noyau central (7), qui communique avec le détenteur du rotor (2) par l'entrefer secondaire (4) et une troisième partie, qui est située entre la partie axiale externe et la partie interne, et les relie entre elles, que l'on appelle disque (8); les parties du noyau externe (3) étant constituées d'un matériau conducteur magnétique avec peu ou pas de rémanence magnétique, tel que du fer doux et des tôles laminées minces d'acier magnétique,
le rotor (2) n'a aucune sorte de bobine d'excitation,
le détenteur du stator (1) supporte un enroulement polyphasé (9) ou des bobines individuelles sur chaque saillie, **caractérisé en ce que** le noyau externe (3) présente une section transversale complète en forme d'anneau de l'armature axiale (6) et une couronne circulaire complète du disque (8), formée par des aimants permanents (10) et par des électro-aimants (11), et des fenêtres de ventilation (20), entre chacun d'eux et une section du noyau central (7) remplacée ou formée par un aimant permanent axial (12),
dans lequel les aimants permanents (10) sont entourés par l'électro-aimant (11) et les aimants permanents axiaux (12) sont chacun entourés d'une bobine (13), dont ils constituent le noyau magnétique correspondant, tous deux formant des électro-aimants avec un noyau d'aimant permanent.

2. Le moteur/générateur électrique selon la revendication 1, dans lequel la largeur des pôles du stator (14) et des pôles du rotor (16) sont égales, tandis que les rainures du stator (15) et les rainures du rotor (17) sont égales ou jusqu'à 25 pour cent de plus à la largeur des pôles (14, 16) et sont réparties à égale distance les unes des autres.

3. Le moteur/générateur électrique excité par transfert magnétique selon les revendications 1 et 2, **caractérisé en ce que** le rotor (2) est muni d'un enroulement à cage d'écureuil.

4. Le moteur/générateur électrique selon la revendication 3, dans lequel la cage d'écureuil laisse un espace libre ou conduit de ventilation (19) dans chaque rainure du rotor, qui traverse le détenteur de part en part.
